# EUROPÄISCHE PATENTANMELDUNG

(11) **EP 3 685 713 A1**
(43) Veröffentlichungstag der Anmeldung: **29.07.2020**
(21) Anmeldenummer: 20150402.4
(22) Anmeldetag: 07.01.2020
(51) Int. Cl.: A47J 31/00, A47J 31/42, A47J 31/52

(54) **HEISSGETRÄNKEBEREITER MIT EINER ZUFÜHRUNGSVORRICHTUNG**

(30) Priorität: 25.01.2019 DE 102019101819
(71) Anmelder: Miele & Cie. KG, 33332 Gütersloh (DE)
(72) Erfinder: Morbach, Andreas, 33334 Gütersloh (DE); Schnelle, Axel, 33106 Paderborn (DE); Schmelter, Stefan, 33102 Paderborn (DE); Westergerling, Mario, 33397 Rietberg (DE)

(57) **Zusammenfassung**

Die Erfindung betrifft einen Heißgetränkebereiter (1) mit einem Strömungsleitungssystem (2) mit
- einer Wasserquelle (14)
- einer Brüheinheit (40), wobei die Brüheinheit (40) eine Brühkammer (41) zur Aufnahme von aufzubrühender Brühsubstanz (S1) und einer Einlassleitung zum Einlassen von Brühwasser in die Brühkammer (41),
- einer Zuführungsvorrichtung (72) zum Zuführen einer vorbestimmten Menge einer ersten Brühsubstanz in die Brühkammer (41),
- eine Heizeinrichtung (9) zum Erhitzen des der Brühkammer (41) zugeführten Wassers
- eine Pumpe (9), die dazu ausgebildet ist, das Wasser aus der Quelle (14) zur Brühkammer (41) zu fördern,
- eine Steuereinrichtung (18) zur Aktivierung und Deaktivierung der genannten Aktoren (8, 9, 72) zur Zubereitung eines ausgewählten Getränks.

Um ein optimales Brühergebnis zu erhalten, ist die Zuführungsvorrichtung (72) dazu eingerichtet, zumindest zwei verschiedene Brühsubstanzen (S1, S2) in die Brühkammer (41) einzulassen, wobei die Steuereinrichtung (18) dazu eingerichtet ist, die Zuführungsvorrichtung (72) derart zu aktivieren, dass nachfolgend nach dem Einlassen der ersten Brühsubstanz (S1) eine zweite Brühsubstanz (S2) in die Brühkammer (41) zur ersten Brühsubstanz (S1) hinzuzufügen zur nachfolgenden Zubereitung durch das Aufbrühen der zumindest zwei in der Brühkammer (41) befindlichen Substanzen (S1, S2).

## Beschreibung

Die Erfindung betrifft einen Heißgetränkebereiter mit einem Strömungsleitungssystem mit
- einer Wasserquelle;
- einer Brüheinheit, wobei die Brüheinheit eine Brühkammer zur Aufnahme von aufzubrühender Brühsubstanz und einer Einlassleitung zum Einlassen von Brühwasser in die Brühkammer,
- einer Zuführungsvorrichtung zum Zuführen einer vorbestimmten Menge einer ersten Brühsubstanz in die Brühkammer,
- eine Heizeinrichtung zum Erhitzen des der Brühkammer zugeführten Wassers
- eine Pumpe, die dazu ausgebildet ist, das Wasser aus der Quelle zur Brühkammer zu fördern,
- eine Steuereinrichtung zur Aktivierung und Deaktivierung der genannten Aktoren zur Zubereitung eines ausgewählten Getränks.

Eine derartige Kaffeemaschine ist aus der WO 2017/050968 A1 bekannt. Die bekannte Kaffeemaschine gehört zu denjenigen Kaffeemaschinen, die in der Lage sind, wenigstens zwei verschiedene Sorten Kaffeegetränk herzustellen und auszugeben; insbesondere sind dies Kaffeegetränke vom Filterkaffeetyp und Kaffeegetränke vom Espressotyp. Die beiden Kaffeegetränke unterscheiden sich neben der vorzugsweisen Verwendung verschiedener Sorten von Kaffeebohnen, durch einen unterschiedlichen Brühdruck, Ferner ist die Pumpe mit verschiedenen Durflussraten einstellbar, die von dem Brühdruck abhängig sind. Hierbei wird in einem Brühvorgang mit einer ersten Durchflussrate begonnen und anhand eines erfassten Drucks in der Leitung eine zweite Durchflussrate eingestellt. Hierbei kann es jedoch vorkommen, dass die zuerst eingestellt Durchflussrate, die letztendlich als erste Ist-Größe herangezogen wird, nicht optimal für das aufzubrühende Pulver ist. Ferner sind hier noch nicht alle Eigenschaften des Pulvers hinreichend berücksichtigt, um ein optimales Brühergebnis zu erhalten.

Der Erfindung liegt somit die Aufgabe zu Grunde, einen Heißgetränkebereiter dahingehend weiterzubilden, dass eine Vielzahl von unterschiedlichen Brühgetränken optimal zubereitet werden können. Insgesamt soll das Brühergebnis verbessert werden.

Erfindungsgemäß wird unter anderem diese Aufgabe durch einen Heißgetränkebereiter mit den Merkmalen des unabhängigen Anspruchs 1 gelöst. Vorteilhafte Ausgestaltungen und Weiterbildungen der Erfindung ergeben sich aus den abhängigen Ansprüchen.

Ein mit der Erfindung erreichbarer Vorteil besteht darin, dass die geräteseitig oder steuerungsseitig voreingestellten Getränke hinsichtlich des Brühprozesses nahezu beliebig verändert oder konfiguriert werden können. Insbesondere kann die Extraktion sehr genau auf das jeweilige Getränk bzw. auf die jeweils verwendete Bohnensorte auf den optimalen Grad eingestellt werden.

Hierzu ist die Zuführvorrichtung dazu eingerichtet, zumindest zwei verschiedene Brühsubstanzen nacheinander oder sequentiell in die Brühkammer einzulassen und die Steuereinrichtung dazu eingerichtet, die Zuführungsvorrichtung derart zu aktivieren, dass nachfolgend nach dem Einlassen der ersten Brühsubstanz eine zweite Brühsubstanz in die Brühkammer zur ersten Brühsubstanz hinzuzufügen zur nachfolgenden Zubereitung durch das Aufbrühen der zumindest zwei in der Brühkammer befindlichen Substanzen. Als unterschiedliche Substanzen können zwei verschiedene Kaffeesorten in gleichen oder unterschiedlichen Gewichts,- oder Volumenanteilen verwendet werden. In einer anderen Ausführung kann Kaffeepulver und Kakaopulver verwendet werden.

In einer insgesamt zweckmäßigen Ausführung ist die Zuführvorrichtung dazu ausgebildet, eine Schichtung von zwei oder mehreren Schichten von verschiedenen Brühsubstanzen in der Brühkammer in Strömungsrichtung des Wassers durch die Brühkammer zu vollbringen. Damit erreicht das durch die Kammer geförderte Wasser die aufzubrühenden Substanzen nacheinander, also zunächst die zuerst eingebrachte und danach, also nach dem Durchfließen durch die Schicht der ersten Substanz und dann die später eingebrachte Substanz. Damit können besondere Aromaentfaltungen im Brühgetränk erreicht und vorbestimmt werden.

In einer weiteren, insgesamt zweckmäßigen Ausführung umfasst oder ist die zweite Brühsubstanz Kaffee mit groben Mahlgrad und die erste Brühsubstanz Kaffee mit feinem Mahlgrad, wobei die zweite, zuletzt eingelassene Brühsubstanz beim Brühvorgang am Brühsieb der Brühkammer anliegt. Damit liegt das gröber gemahlene Kaffeepulver an dem Brühsieb an und das sehr fein gemahlene, also feiner gemahlene Pulver liegt an dem grob gemahlenen Pulver an, aber nicht direkt am Brühsieb. Dadurch wird verhindert, dass das feine Pulver das Brühsieb verstopft, sodass eine Brühsubstanz oder Kaffee mit feinem Mahlgrad verwendet werden kann, die ansonsten nicht in der Brühkammer aufgebrüht werden kann.

In einer insgesamt vorteilhaften Ausführung ist die Menge der zweiten Brühsubstanz 10 - 20g und die Menge der ersten Brühsubstanz 15-30g, wobei die Menge der ersten Brühsubstanz größer als die Menge der zweiten Brühsubstanz. Das bedeutet, die geschmacksbildend Brühsubstanz, die in der größeren Menge in der Brühkammer vorliegt, befindet sich in Strömungsrichtung vor der sekundären Substanz, die an dem Brühsieb anliegt.

In einer spezifischen Ausführung umfasst oder ist die erste Brühsubstanz eine erste Kaffeesorte und die zweite Brühsubstanz die gleiche Kaffeesorte der ersten Brühsubstanz. Hierbei unterscheiden sich die Brühsubstanzen nur durch den Mahlgrad.

In einer anderen Ausführung umfasst oder ist die erste Brühsubstanz eine erste Kaffeesorte und die zweite Brühsubstanz eine zweite, von der ersten Kaffeesorte sich unterscheidende Kaffeesorte. Dadurch sind individuell zu konfigurierende und filigrane Kompositionen möglich.

Heißgetränkebereiter nach einem der Ansprüche 1 bis 4, ferner umfassend ein Mahlwerk (70) zum Mahlen von Kaffeebohnen, um das Kaffeepulver der Brühkammer (41) zuzuführen, und einer motorischen Einstellung des Mahlgrades
wobei die Steuereinrichtung dazu eingerichtet ist,.

In einer Ausführung des Heißgetränkebereiters mit einem Mahlwerk zum Mahlen von Kaffeebohnen, um das Kaffeepulver der Brühkammer zuzuführen, ist dieses mit einer motorischen Einstellung des Mahlgrades ausgestattet. Bei dieser Ausführung ist die Steuereinrichtung dazu eingerichtet, das Mahlwerk und die Zuführeinrichtung zu aktivieren und zu deaktivieren und dadurch einen ersten vorbestimmten Mahlgrad einzustellen und das Mahlwerk zu aktivieren, um eine vorbestimmte Menge Brühsubstanz mit dem ersten Mahlgrad zu erzeugen und in die Brühkammer einzulassen. Anschließend stellt die Steuereinrichtung den Mahlgrad auf einen zweiten, sich vom ersten Mahlgrad unterscheidenden Mahlgrad ein und aktiviert das Mahlwerk erneut oder setzt das bereits aktivierte Mahlen fort, um eine weitere vorbestimmte Menge Brühsubstanz zu erzeugen und in die Brühkammer einzulassen. Damit kann mit einem einzigen Mahlwerk eine Schichtung von Substanzen mit unterschiedlichen Mahlgraden bereitgestellt werden. Diese Anordnung ist besonders platzsparend im Gerätegehäuse unterzubringen.

In einer anderen vorteilhaften Ausführung des Heißgetränkebereiters umfasst dieser zur Bereitstellung des Kaffees mit dem ersten vorbestimmten Mahlgrad ein erstes Mahlwerk und zur Bereitstellung des Kaffees mit dem zweiten vorbestimmten Mahlgrad ein zweites Mahlwerk. Die Auslässe jedes Mahlwerks münden in die Brühkammer oder oberhalb der Zugangsöffnung der Brühkammer, um das Kaffeepulver der Brühkammer zuzuführen. Die Steuereinrichtung ist dazu eingerichtet, zu Beginn der Beschickung nur das erste Mahlwerk zum Erzeugen einer vorbestimmte Menge Brühsubstanz mit dem ersten Mahlgrad zu aktivieren und anschließend das erst Mahlwerk zu deaktivieren und das zweite Mahlwerk zu aktivieren um eine weitere vorbestimmte Menge Brühsubstanz zu erzeugen und in die Brühkammer (41) einzulassen. Mit dieser Ausführung ist eine Schichtung der verschiedenen Brühsubstanzen innerhalb der Brühkammer möglich. Eine Mischung der verschiedenen Brühsubstanzen kann auch bereitgestellt werden, indem beide Mahlwerke gleichzeitig aktiviert werden.

In der Ausführung mit zwei oder mehreren Mahlwerken können einfach aufgebaute Mahlwerke ohne motorische Einstellung des Mahlgrades verwendet werden. Ferner kann ein schneller Wechsel von der Brühsubstanz mit dem ersten Mahlgrad auf die Brühsubstanz mit dem zweiten Mahlgrad vollzogen werden, wobei der erste Mahlgrad sich vom zweiten unterschiedet.

In einer insgesamt vorteilhaften Ausführung der Erfindung ist die Zuführvorrichtung dazu eingerichtet, nachfolgend nach dem Einlassen der zwei verschiedenen Brühsubstanzen in die Brühkammer eine dritte Brühsubstanz in die Brühkammer zu den bereits in der Brühkammer befindlichen Brühsubstanzen hinzuzufügen zur nachfolgenden Zubereitung durch das Aufbrühen der zumindest drei in der Brühkammer befindlichen Substanzen. Hierbei werden drei Schichten Brühsubstanzen in die Brühkammer eingelassen. Es sind auch mehr als drei Schichten möglich, wenn dies ein entsprechendes Getränk erfordert.

In einer weiteren bevorzugten Ausführung umfasst der Heißgetränkebereiter eine Bedien-und Anzeigevorrichtung, die Eingaben zur Auswahl des zuzubereitenden Getränks, den Geschmackseigenschaften, Mahlgrad, Kaffeesorte, und/oder Wassermenge für den Benutzer bereitstellt, wobei die Bedien-und Anzeigevorrichtung zur Übergabe der genannten Informationen mit der Steuereinrichtung in Datenverbindung steht, wobei die Bedien-und Anzeigevorrichtung dazu eingerichtet ist, die einzelnen Mengen und/oder Sorten und/oder Mahlgrade der in die Brühkammer einzulassenden Substanzen als Konfigurationsdaten festzulegen, wobei die Steuereinrichtung dazu eingerichtet ist, die Konfigurationsdaten abzuspeichern und für die nachfolgende Zubereitung von Getränken heranzuziehen.

In einer bevorzugten Weiterbildung ist die Bedien- und Anzeigevorrichtung dazu eingerichtet, Mengen und/oder Mengenanteile für die in die Brühkammer einzulassenden Brühsubstanzen zur Eingabe durch einen Benutzer bereitzustellen. Dabei ist die Bedien- und Anzeigevorrichtung bevorzugt als Berührbildschirm ausgebildet, auf den die Mengen oder Anteile symbolisch dargestellt sind und die der Benutzer durch Berührung oder Wischgesten auswählen und variieren kann.

In einer weiteren Weiterbildung ist die Steuereinrichtung dazu ausgebildet, die individuell festgelegten Konfigurationsdaten zu jeweils einem Getränk durch den Benutzer mittels der Bedien- und Anzeigevorrichtung zuzuordnen.

Ein Ausführungsbeispiel der Erfindung ist in den Zeichnungen rein schematisch dargestellt und wird nachfolgend näher beschrieben. Es zeigen
- Fig. 1:: einen Heißgetränkebereiter in einer teilweise schematischen Schnittdarstellung und
- Fig. 2 bis 4:: einen Heißgetränkebereiter in einer schematischen Seitenansicht in verschiedenen Ausführungen. des Strömungsleitungssystems in einer schematischen Ansicht.

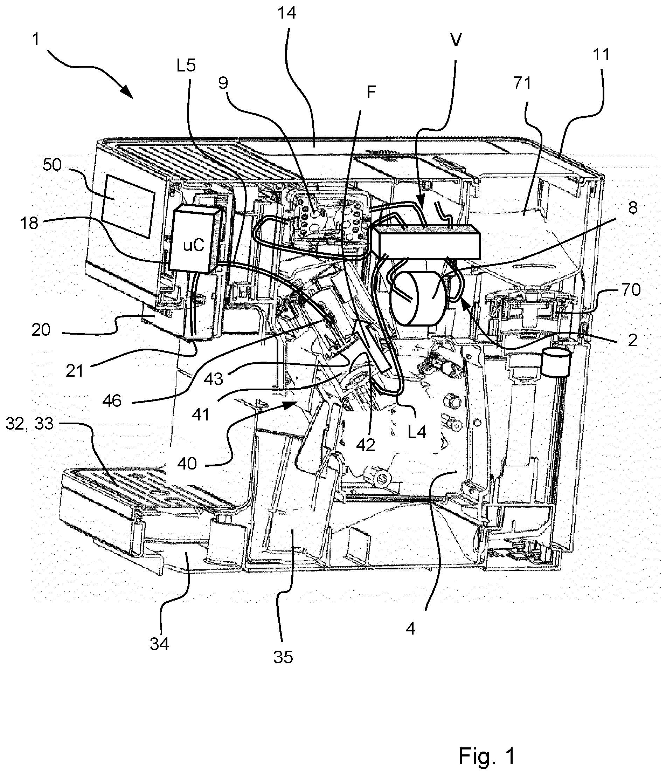

Die Fig.1 zeigt am Beispiel eines als Standgerät ausgebildeten Heißgetränkebereiter 1 mit allen relevanten Komponenten für die Zubereitung eines Heißgetränks. Der Getränkebereiter 1 umfasst unter anderem ein Gehäuse 11, in dem der Vorratsbehälter 71 für Kaffeebohnen mit darunter angebrachtem Mahlwerk 70 mit Motor, den Wasserbehälter 14 sowie die Möglichkeit, der Unterbringung des Strömungsleitungssystems 2. Im Frontbereich des Heißgetränkebereiter 1 verfügt dieser über einen höhenbeweglichen Auslass 20, in dem mehrere Entnahmeeinrichtungen, hier Auslassdüsen 21 untergebracht sind. Die Entnahmeeinrichtung 21 stellt eine Ausgabeleitung oder Ausgabedüse 21 zur Abgabe von Kaffeegetränken dar. Eine Brüheinheit 40 mit einer Brühkammer 41 im Inneren des Gerätes 1 dient zur Zubereitung des Getränkes, wobei in die Brühkammer 41 das Kaffeepulver eingebracht und anschließend mit heißem Wasser durchflutet wird, sodass zur Ausgabeleitung und durch die Ausgabedüse 21 das fertige Kaffeegetränk ausgegeben wird. Bei dieser Ausführung sind die Ausgabedüsen 21 in der Höhe verschiebbar angeordnet, so dass sie der Höhe eines auf der Abstellfläche 33 abgestellten Trinkgefäßes angepasst werden kann, ohne dass bei der Abgabe des Getränkes ein Verspritzen erfolgt. Den oberen Abschluss der Abstellfläche 33 bildet ein Abtropfblech 32, das mit Öffnungen und Schlitzen versehen ist, um Flüssigkeitsreste in einer unterhalb des Abtropfbleches 32 vorhandenen Auffangschale 34 abzuführen. Ferner umfasst der Heißgetränkebereiter 1 einen Tresterbehälter 35, in den die aufgebrauchte Substanz, beispielsweise Kaffeekuchen, nach Vollendung der Getränkezubereitung hineingeworfen wird. Das Gerät 1 umfasst ferner eine Steuereinrichtung 18, die dazu eingerichtet ist, die einzelnen Funktionsbaugruppen, wie Pumpen 8, Ventile V und Heizeinrichtung 9 und Mahlwerk 70, soweit vorhanden, zu steuern, wie es für die Zubereitung des jeweils ausgewählten Getränkes notwendig ist. Die Steuereinrichtung 18, die als Mikrocontroller uC mit einem zugeordneten Speicher ausgeführt ist, ist in dieser Ausführung ferner dazu eingerichtet, die Ventile V des Strömungsleitungssystems 2 so anzusteuern, dass das heiße Wasser durch die Brühkammer 41, gepumpt wird.

Für alle hier erläuterten Ausführungen ist die Brühkammer 41 zylindrisch ausgebildet, wobei die Schichtung der Substanzen S1, S2 ggf. S3 von der bodenseitigen Stirnseite ausgehend erfolgt. Die obere Stirnseite wird nach dem Befüllen mit dem Brühsieb 43 verschlossen, wobei mit dem Brühsieb 43 die Substanzen in der Brühkammer 41 verpresst werden. Das heiße Wasser wird in den Einlass 42 an der bodenseitigen Stirnseite eingelassen, wobei die Brühflüssigkeit durch das Brühsieb 43 und bevorzugt durch ein nachgeschaltetes Druckventil 46 zur Auslassdüse 21 gelangt.

Außenseitig an der Frontwand des Gehäuses 11 ist die Bedien- und Anzeigevorrichtung 50 angeordnet, in diesem Beispiel ist sie mit Touchflächen und einem Display oder als Berührbildschirm ausgebildet, um Eingaben bezüglich der Getränkeauswahl und zusätzliche Einstellungen hinsichtlich Wassermenge, Geschmack Stärke oder Bohnensorte bereitzustellen. Die Bedien- und Anzeigevorrichtung 50 steht dabei datentechnisch mit der Steuereinrichtung 18 bzw. mit dem dort vorhandenem Mikroprozessor uC in Verbindung.

Die Steuereinrichtung 18 mit einem Mikrocontroller uC und einer Speichereinrichtung MEM dient zur Durchführung einer Getränkezubereitung, wobei hierbei die Aktivierung der Heizeinrichtung 9, der Ventile der Ventilvorrichtung V sowie der Pumpe 8, der Brühkammer 40 und bedarfsweise weiteren Komponenten, wie einem Mahlwerk 70 durch entsprechende Signalverbindungen (nicht dargestellt) erfolgt.

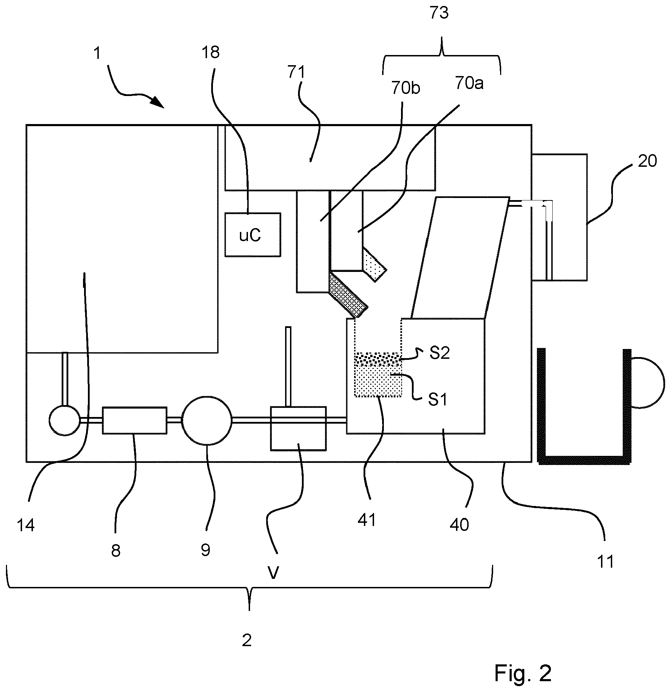

Fig. 2 zeigt schematisch eine erste Ausführung mit zwei Mahlwerken 70a, 70b, wobei die Mahlwerke in diesem Beispiel die Aufgabe der Zuführeinrichtung 73 übernehmen. In dem gezeigten Beispiel werden beide Mahlwerke 70a, 70b von demselben Bohnenbehälter 71 gespeist oder mit ungemahlenen Bohnen versorgt. Das erste Mahlwerk 70a ist hierbei auf einen groben Mahlgrad, beispielsweise mit einer Körnung von 10 bis 20 und das zweite Mahlwerk 70b auf einen feineren Mahlgrad, beispielsweise 50 bis 100 eingestellt. Die in die Brühkammer 41 einzulassende Menge wird durch die Mahldauer des jeweiligen Mahlwerks 70a, 70b bestimmt. In dem gezeigten Beispiel ist die Brühkammer 41 mit einer ersten Brühsubstanz S1 Kaffee mit feinem Mahlgrad und einer zweiten Brühsubstanz S2 Kaffee mit groben Mahlgrad befüllt. Din der gezeigten Situation ist die Brühkammer 41 noch geöffnet, das Brühsieb 43 verschließt dabei noch nicht die Brühkammer 41. Die Substanz S2 mit dem groben Mahlgrad befindet sich hierbei nah zum Brühsieb 43, wenn dieses die Brühkammer 41 verschließt. Die Mahlwerke 70a, 70b werden entsprechend mittels der Steuereinrichtung 18 aktiviert und deaktiviert, wobei die Dauer der jeweiligen Aktivierung die Mahlmenge festlegt.

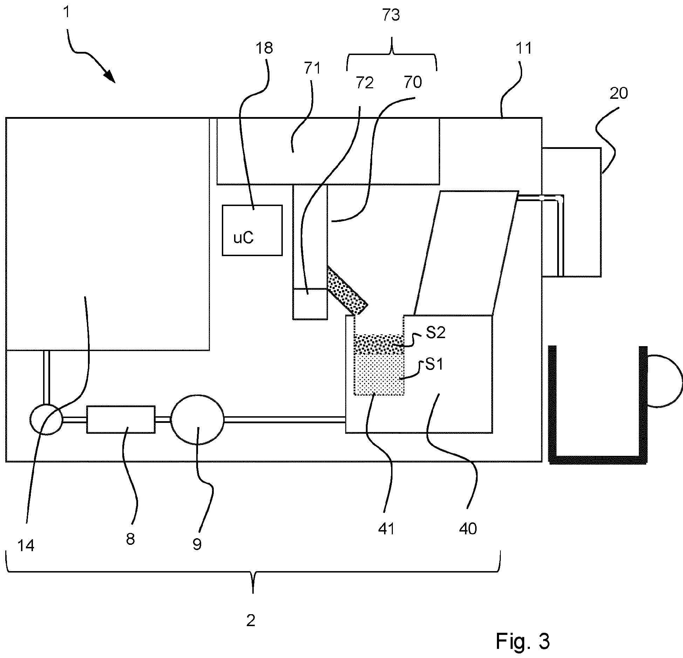

Fig. 3 zeigt schematisch eine zweite Ausführung mit einem Mahlwerk 70, das mit einer motorischen Mahlgradeinstellvorrichtung 72 versehen ist. Diese beiden Vorrichtungen übernehmen die Aufgabe der Zuführeinrichtung 73. In dem gezeigten Beispiel wird das Mahlwerk 70 von einem einzigen Bohnenbehälter 71 mit ungemahlenen Bohnen versorgt oder gespeist. Das Mahlwerk 70 ist hierbei in einer ersten Phase auf einen feinen Mahlgrad eingestellt und lässt die fein gemahlene Substanz S1 in die Brühkammer. Anschließend wird der Mahlgrad auf einen groben Wert eingestellt und eine vorbestimmte Menge an Kaffeepulver mit dem groben Mahlgrad S2 in die Brühkammer eingelassen. Die in die Brühkammer 41 einzulassende Menge wird durch die Mahldauer des Mahlwerks 70 mit dem jeweils eingestellten Mahlgrad bestimmt. In dem gezeigten Beispiel ist die Brühkammer 41 mit einer ersten Brühsubstanz S1 Kaffee mit feinem Mahlgrad und einer zweiten Brühsubstanz S2 Kaffee mit groben Mahlgrad befüllt. In der gezeigten Situation ist die Brühkammer 41 noch geöffnet, das Brühsieb 43 verschließt dabei noch nicht die Brühkammer 41. Die Substanz S2 mit dem groben Mahlgrad befindet sich hierbei nah zum Brühsieb 43, wenn dieses die Brühkammer 41 verschließt. Das Mahlwerk 70 und die Mahlgradeinstellvorrichtung 72 werden entsprechend mittels der Steuereinrichtung 18 aktiviert und deaktiviert, wobei die Dauer der jeweiligen Aktivierung des Mahlwerks in der jeweiligen Stellung der Mahlgradeinstellvorrichtung 72 die jeweilige Mahlmenge festlegt.

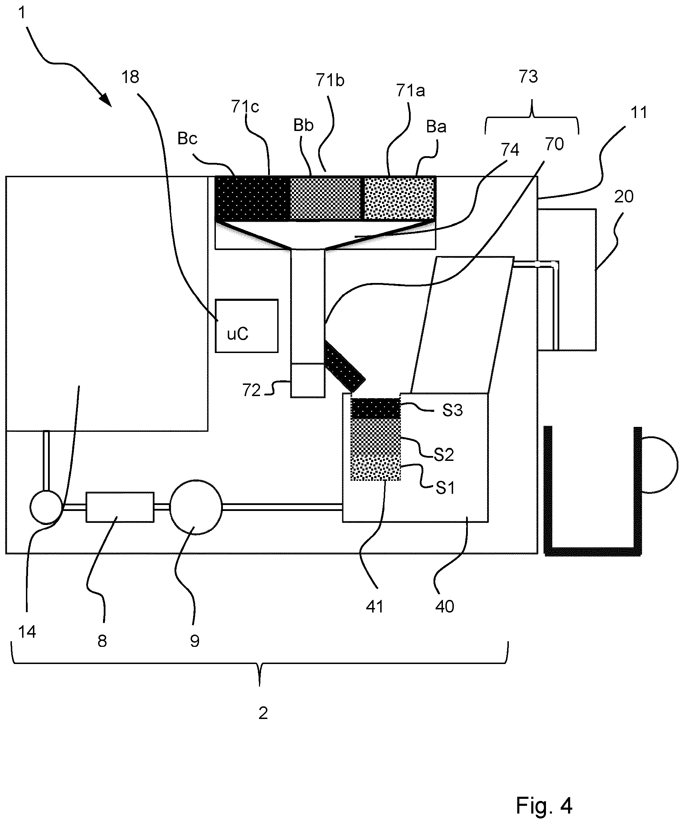

Fig. 4 zeigt schematisch eine dritte Ausführung mit einem einzigen Mahlwerk 70, das mit einer motorischen Mahlgradeinstellvorrichtung 72 versehen ist. Dem Mahlwerk 70 ist ein Auswahlmittel 74 und drei Bohnenbehälter 71a, 71b, 71c vorgeschaltet. Mit dem Auswahlmittel 74 wird jeweils einer der drei Bohnenbehälter 71a, 71b, 71c mit dem Mahlwerk 70 verbunden, sodass die Bohnen Ba, Bb, Bc aufgrund der Schwerkraft aus dem ausgewählten Behälter 71a, 71b, 71c in das Mahlwerk fallen können. Die Steuerung des Auswahlmittels 74 übernimmt dabei die Steuereinrichtung 18. Das Auswahlmittel 74 bildet gemeinsam mit dem Mahlwerk 70 die Zuführeinrichtung 73. In dem gezeigten Beispiel wird das Mahlwerk 70 also von drei Bohnenbehältern 71a, 71b, 71c mit ungemahlenen Bohnen versorgt oder gespeist. Das Auswahlmittel 74 ist hierbei in einer ersten Phase auf den ersten Bohnenbehälter 71a mit einer ersten Bohnensorte eingestellt, sodass das Mahlwerk diese Bohnensorte als gemahlene Substanz S1 in die Brühkammer einlässt. Anschließend wird das Auswahlmittel 74 so verfahren, dass der zweite Behälter 71b dem Mahlwerk 70 zugeordnet ist, sodass nun eine vorbestimmte Menge an Kaffeebohnen der zweiten Sorte gemahlen und als zweite Brühsubstanz S2 in die Brühkammer 41 eingelassen wird. Mit dieser Maßnahme können zwei verschiedene Sorten Kaffee oder Brühsubstanzen S1, S2 geschichtet in die Brühkammer 41 eingelassen werden. Als weitere Ausführung zeigt fig. 4 einen dritten Bohnenbehälter 71c, der mit dem Auswahlmittel 74 ausgewählt und damit mit dem Mahlwerk 70 verbunden werden kann. Das Einlassen der gemahlenen Substanz S3 erfolgt dann wie zuvor beschrieben. Die in die Brühkammer 41 einzulassende Mengen der einzelnen Substanzen S1, S2, S3 werden durch die Mahldauer des Mahlwerks 70 zum Mahlen der jeweils einzelnen Bohnensorten bestimmt. In dem gezeigten Beispiel ist die Brühkammer 41 mit einer ersten Brühsubstanz S1 gemahlener Kaffee einer ersten Sorte und einer zweiten Brühsubstanz S2 gemahlener Kaffee einer zweiten Sorte und einer dritten Brühsubstanz S3 gemahlener Kaffee einer dritten Sorte befüllt. In der gezeigten Situation ist die Brühkammer 41 noch geöffnet, das Brühsieb 43 verschließt dabei noch nicht die Brühkammer 41. Die Substanz S2 mit dem groben Mahlgrad befindet sich hierbei nah zum Brühsieb 43, wenn dieses die Brühkammer 41 verschließt. Die Dauer der jeweiligen Aktivierung des Mahlwerks 70 in der jeweiligen Stellung des Auswahlmittels 74 bestimmt die jeweilige Mahlmenge.

Das Mahlwerk 70 ist hierbei zusätzlich mit einer Mahlgradeinstellvorrichtung 72 versehen, um den Mahlgrad einstellen oder verändern zu können. Bei einer motorischen Verstellung können während der Befüllung der Brühkammer 41 jeweils unterschiedliche Körnungen für die einzelnen Brühsubstanzen S1, S2, S3 realisiert werden, in der Art und Weise, wie für die zweite Ausführungsform zu Fig. 3 erläutert.

Somit wird aus der Kombination aus den erläuterten Beispielen aus Fig. 3 und 4 eine Vielzahl von Konfigurationsmöglichkeiten zur Beeinflussung, Schichtung oder Mischung der in die Brühkammer 41 einzulassenden Substanzen S1, S2, S3 für das Aufbrühen eines Getränks bereitgestellt. Dies kann entsprechend auch mit zwei Vorratsbehältern 71a, 71b für Bohnen Ba, Bb bereitgestellt werden, wobei hier die Anwahlmöglichkeit für eine dritte Bohnensorte entfällt. Auch eine Variante mit nur einem einzigen Vorratsbehälter 71a ist möglich, wobei dann nur eine einzige Kaffeesorte mit verschiedenen Mahlgraden zum Schichten in die Brühkammer bereitgestellt wird.

Für alle hier erläuterten Ausführungen ist die Brühkammer 41 zylindrisch ausgebildet, wobei die Schichtung der Substanzen S1, S2 ggf. S3 von der bodenseitigen Stirnseite ausgehend erfolgt. Die obere Stirnseite wird nach dem Befüllen mit dem Brühsieb 43 verschlossen, wobei mit dem Brühsieb 43 die Substanzen in der Brühkammer 41 verpresst werden.

## Patentansprüche

1. Heißgetränkebereiter (1) mit einem Strömungsleitungssystem (2) mit
- einer Wasserquelle (14)
- einer Brüheinheit (40), wobei die Brüheinheit (40) eine Brühkammer (41) zur Aufnahme von aufzubrühender Brühsubstanz (S1) und einer Einlassleitung zum Einlassen von Brühwasser in die Brühkammer (41),
- einer Zuführungsvorrichtung (70, 73) zum Zuführen einer vorbestimmten Menge einer ersten Brühsubstanz (S1) in die Brühkammer (41),
- eine Heizeinrichtung (9) zum Erhitzen des der Brühkammer (41) zugeführten Wassers
- eine Pumpe (8), die dazu ausgebildet ist, das Wasser aus der Quelle (14) zur Brühkammer (41) zu fördern,
- eine Steuereinrichtung (18) zur Aktivierung und Deaktivierung der genannten Aktoren (8, 9, 72) zur Zubereitung eines ausgewählten Getränks,
**dadurch gekennzeichnet,**
**dass** die Zuführvorrichtung (70, 73) dazu eingerichtet ist, zumindest zwei verschiedene Brühsubstanzen (S1, S2) in die Brühkammer (41) einzulassen und die Steuereinrichtung (18) dazu eingerichtet ist, die Zuführungsvorrichtung (70, 73) derart zu aktivieren, dass nachfolgend nach dem Einlassen der ersten Brühsubstanz (S1) eine zweite Brühsubstanz (S2) in die Brühkammer (41) zur ersten Brühsubstanz (S1) hinzuzufügen zur nachfolgenden Zubereitung durch das Aufbrühen der zumindest zwei in der Brühkammer (41) befindlichen Substanzen (S1, S2).

2. Heißgetränkebereiter nach Anspruch 1,
**dadurch gekennzeichnet,**
**dass** die Zuführvorrichtung (70, 73) dazu ausgebildet ist, eine Schichtung von zwei oder mehreren Schichten von verschiedenen Brühsubstanzen (S1, S2) in der Brühkammer (41) in Strömungsrichtung (F) des Wassers durch die Brühkammer (41) zu vollbringen.

3. Heißgetränkebereiter nach Anspruch 1,
**dadurch gekennzeichnet,**
**dass** die zweite Brühsubstanz (S2) Kaffee mit groben Mahlgrad und die erste Brühsubstanz (S1) Kaffee mit feinem Mahlgrad umfasst bzw. ist, wobei die zweite, zuletzt eingelassene Brühsubstanz (S2) beim Brühvorgang am Brühsieb (43) der Brühkammer (41) anliegt.

4. Heißgetränkebereiter nach einem der Ansprüche 1 bis 3,
**dadurch gekennzeichnet,**
**dass** die Menge der zweiten Brühsubstanz (S2) 10 - 20g und die Menge der ersten Brühsubstanz (S1) 15-30g, wobei die Menge der ersten Brühsubstanz (S1) größer als die Menge der zweiten Brühsubstanz (S2) ist.

5. Heißgetränkebereiter nach einem der Ansprüche 1 bis 4,
**dadurch gekennzeichnet,**
**dass** die erste Brühsubstanz (S1) eine erste Kaffeesorte (Ba) umfasst oder ist und die zweite Brühsubstanz (S2) die gleiche Kaffeesorte (Ba) der ersten Brühsubstanz (S1) umfasst oder ist.

6. Heißgetränkebereiter nach einem der Ansprüche 1 bis 4,
**dadurch gekennzeichnet,**
**dass** die erste Brühsubstanz (S1) eine erste Kaffeesorte (Ba) umfasst oder ist und die zweite Brühsubstanz (S2) eine zweite, von der ersten Kaffeesorte (Ba) sich unterscheidende Kaffeesorte (Bb) umfasst oder ist.

7. Heißgetränkebereiter nach einem der Ansprüche 1 bis 6, ferner umfassend ein Mahlwerk (70) zum Mahlen von Kaffeebohnen (Ba, Bb, Bc), um das Kaffeepulver der Brühkammer (41) zuzuführen, und einer Mahlgradeinstellvorrichtung (72) zum Einstellen des Mahlgrades
wobei die Steuereinrichtung (18) dazu eingerichtet ist, einen ersten vorbestimmten Mahlgrad einzustellen und das Mahlwerk (70) zu aktivieren, um eine erste vorbestimmte Menge Brühsubstanz (S1) mit dem ersten Mahlgrad zu erzeugen und in die Brühkammer (41) einzulassen und anschließend den Mahlgrad auf einen zweiten, sich vom ersten Mahlgrad unterscheidenden Mahlgrad einzustellen und das Mahlwerk (70) zu aktivieren oder die Aktivität beizubehalten, um eine weitere vorbestimmte Menge Brühsubstanz (S2) zu erzeugen und in die Brühkammer (41) einzulassen.

8. Heißgetränkebereiter nach einem der Ansprüche 1 bis 6, ferner umfassend zur Bereitstellung des Kaffees (S1) mit dem ersten vorbestimmten Mahlgrad ein erstes Mahlwerk (70a) und zur Bereitstellung des Kaffees (S2) mit dem zweiten vorbestimmten Mahlgrad ein zweites Mahlwerk (70b) vorhanden ist, dessen Auslässe in die eine Brühkammer (41) münden, um das Kaffeepulver der Brühkammer (41) zuzuführen, wobei die Steuereinrichtung (18) dazu eingerichtet ist, nur das erste Mahlwerk (70a) zum Erzeugen einer vorbestimmte Menge Brühsubstanz (S1) mit dem ersten Mahlgrad zu aktivieren und anschließend das erst Mahlwerk (70a) zu deaktivieren und das zweite Mahlwerk (70b) zu aktivieren um eine weitere vorbestimmte Menge Brühsubstanz (S2) zu erzeugen und in die Brühkammer (41) einzulassen.

9. Heißgetränkebereiter nach einem der Ansprüche 1 bis 8,
**dadurch gekennzeichnet,**
**dass** die Zuführvorrichtung (72) dazu eingerichtet ist, nachfolgend nach dem Einlassen der zwei verschiedenen Brühsubstanzen (S1, S2) in die Brühkammer (41) eine dritte Brühsubstanz (S3) in die Brühkammer (41) zur den bereits in der Brühkammer (41) befindlichen Brühsubstanzen (S1, S2) hinzuzufügen zur nachfolgenden Zubereitung durch das Aufbrühen der zumindest drei in der Brühkammer (41) befindlichen Substanzen.

10. Heißgetränkebereiter nach einem der Ansprüche 1 bis 9, ferner umfassend eine Bedien-und Anzeigevorrichtung (50), die Eingaben zur Auswahl des zuzubereitenden Getränks, den Geschmackseigenschaften, Mahlgrad, Kaffeesorte, und/oder Wassermenge für den Benutzer bereitstellt, wobei die Bedien-und Anzeigevorrichtung (50) zur Übergabe der genannten Informationen mit der Steuereinrichtung (18) in Datenverbindung steht, wobei die Bedien-und Anzeigevorrichtung (50) dazu eingerichtet ist, die einzelnen Mengen und/oder Sorten und/oder Mahlgrade der in die Brühkammer (41) einzulassenden Substanzen (S1m, S2) als Konfigurationsdaten festzulegen, wobei die Steuereinrichtung (18) dazu eingerichtet ist, die Konfigurationsdaten abzuspeichern und für die nachfolgende Zubereitung von Getränken heranzuziehen.

11. Heißgetränkebereiter nach Anspruch 10,
**dadurch gekennzeichnet,**
**dass** die Bedien- und Anzeigevorrichtung (50) dazu eingerichtet ist, Mengen und/oder Mengenanteile für die in die Brühkammer (41) einzulassenden Brühsubstanzen (S1, S2) zur Eingabe durch einen Benutzer bereitzustellen.

12. Heißgetränkebereiter nach Anspruch 10 oder 11,
**dadurch gekennzeichnet,**
**dass** die Steuereinrichtung (18) dazu ausgebildet ist, die individuell festgelegten Konfigurationsdaten zu jeweils einem Getränk durch den Benutzer mittels der Bedien-und Anzeigevorrichtung (50) zuzuordnen.
